# FASCICULE DE BREVET EUROPEEN

(11) **EP 0 877 006 B1**
(45) Date de publication et mention de la délivrance du brevet: **04.01.2006**
(21) Numéro de dépôt: 98401095.9
(22) Date de dépôt: 06.05.1998
(51) Int. Cl.: C03C 17/36

(54) **Substrats transparents munis de couches a propriétés de reflexion dans l'infra-rouge et/ou dans le domaine du rayonnement solaire**
Transparente Substrate mit einer Häufung von Schichten mit Infrarot und/oder Sonnenstrahlung reflektierenden Eigenschaften
Transparent substrates coated with a multi-layered coating having reflective characteristics in the infrared and/or solar radiation region

(30) Priorité: 09.05.1997 DE 19719543
(43) Date de publication de la demande: 11.11.1998
(73) Titulaire: SAINT-GOBAIN GLASS FRANCE, 92400 Courbevoie (FR)
(72) Inventeur: Schicht, Heinz, Dr., 06925 Bethau (DE); Schmidt, Uwe, 04895 Falkenberg/Elster (DE); Kaiser, Wilfried, 04860 Torgau (DE); Ditzel, Gerhard, 04860 Welsau (DE); Hryniw, Bodo, 04860 Torgau (DE)
(74) Mandataire: Muller, René

(56) Documents cités:
- EP-A- 0 279 550
- EP-A- 0 464 789
- EP-A- 0 543 077
- EP-A- 0 636 587
- EP-A- 0 638 528
- EP-A- 0 718 250
- EP-A- 0 751 099

## Description

L'invention concerne les substrats transparents, notamment en verre, revêtus d'un empilement de couches minces comprenant au moins une couche du type métallique pouvant agir sur le rayonnement solaire et/ou sur le rayonnement infra-rouge de grandes longueurs d'ondes. On parle ainsi d'empilements bas émissif ou de contrôle solaire, que l'on désignera par la suite par le terme d'empilements « fonctionnels ».

Il peut ainsi s'agir d'empilements à une ou plusieurs couches métalliques du type couches d'argent, disposée(s) entre des revêtements diélectrique éventuellement par l'intermédiaire de fines couches (du type métal, métal partiellement oxydé) ayant des fonctions de protection, de nucléation, etc... On trouvera la description de tels empilements par exemple dans les brevets EP-638 528 et EP-718 250.

L'invention concerne notamment un empilement de couches bas-émissif pour substrats transparents et constitué d'au moins cinq couches, à savoir des couches antireflet diélectriques inférieure et supérieure d'un ou plusieurs composés métalliques ou semi-conducteurs (oxyde métallique, nitrure ou oxynitrure métallique ou de Si), une couche fonctionnelle en argent, une couche de blocage, disposée directement sur la couche en argent, constituée d'un métal, un alliage métallique ou un oxyde sous-stoechiométrique d'un métal ou d'un alliage métallique, ainsi que d'une couche disposée directement en dessous de la couche en argent, à base d'oxyde de zinc dopé avec de l'aluminium.

Les empilements de couches de ce type sont généralement déposés par le procédé de pulvérisation cathodique réactive par champ magnétique. La disposition d'une couche ZnO, directement sous la couche en argent, favorise l'édification de la couche en argent lors du dépôt ultérieur de l'argent, qui se développe particulièrement régulièrement à sa surface. Les propriétés de la couche en argent, en particulier l'émissivité, la transmission lumineuse dans le domaine visible et la conductivité électrique s'en trouvent améliorées. D'autre part, il est connu que les empilements de couches comprenant une couche en ZnO pur présentent des résistances mécanique et chimique diminuées. Ceci est attribué au fait que des tensions internes se forment dans les couches de ZnO pur, qui conduisent à une altération de la couche et à une séparation de cette couche des couches voisines.

Pour améliorer les propriétés mécaniques et de résistance vis-à-vis de la corrosion, des empilements de couches contenant du ZnO, il est connu de doper la couche ZnO avec d'autres éléments. Dans le brevet DE-41 35 701 C2, par exemple, on décrit le dopage de la couche de ZnO avec une quantité d'oxyde de Al de 0 à 10% atomique, ou de pulvériser la couche de ZnO à partir d'une cible en zinc avec un mélange d'éléments ayant un nombre atomique entre 57 et 71 du tableau périodique, c'est-à-dire avec un élément de ia série des terres rares, et avec une certaine quantité d'Al. Ce document ne décrit rien du mode d'action, ni des avantages éventuels de tels additifs d'alliage. Les empilements de couches fonctionnels type bas-émissifs décrits dans ce document doivent cependant présenter une résistance élevée vis-à-vis de l'humidité et vis-à-vis des attaques chimiques.

Le brevet EP-O 751 099 A1 décrit des systèmes à couches bas-émissif, à base d'argent dans lesquels une couche ZnO est disposée directement sous la couche en argent. Dans ce cas également, la résistance à l'humidité et la résistance à la rayure des empilements de couches sont améliorées. Pour cela, la couche en argent doit être dopée au Pd et la couche en ZnO doit contenir au moins un élément du groupe comprenant Sn, Al, Cr, Ti, Si, B, Mg et Ca. La couche de ZnO disposée sous la couche en argent joue cependant également le rôle de couche antireflet inférieure et présente donc une épaisseur relativement grande. L'élément supplémentaire dans la couche ZnO a également, dans ce cas, la fonction de réduire les tensions internes présentes dans la couche ZnO et ainsi, d'améliorer l'adhérence entre la couche de ZnO et la couche d'Ag, ce qui contribue à améliorer la résistance à l'humidité.

A l'opposé, l'invention a pour but d'une part d'améliorer pour ce type d'empilement de couches la capacité à supporter sans altération des traitements thermiques, et en particulier, de procurer un empilement de couches pour substrat en verre, qui puisse être soumis à des températures d'un traitement thermique relativement élevées après le dépôt desdites couches, sans détériorer les propriétés notamment optiques de l'empilement.

Suivant l'invention, ce but est atteint par le fait que la couche ZnO dopé d'Al présente en outre, une certaine quantité de Si.

L'invention a pour objet un substrat transparent, notamment verrier, muni d'un empilement du type bas-émissif ou de contrôle solaire, d'au moins cinq couches dont au moins une couche fonctionnelle métallique à propriétés dans l'infra-rouge du type argent, des couches supérieure et inférieure antireflet en matériau diélectrique, une couche de blocage disposée entre la couche fonctionnelle et la couche antireflet supérieure, et une couche disposée directement sous la couche métallique du type argent, à base d'oxyde de zinc à la fois dopé avec Al et Si.

Au sens de l'invention, les couches antireflet supérieure (au-dessus de la couche métallique fonctionnelle) ou inférieure (au-dessous) sont soit des couches individuelles, soit une superposition d'au moins deux couches de diélectrique.

De préférence, le substrat revêtu conformément à l'invention comporte soit une seule couche fonctionnelle du type argent avec sa sous-couche à base de ZnO:AlSi, soit au moins deux couches fonctionnelles.

Dans ce cas, au moins l'une des couches fonctionnelles est munie de la sous-couche selon l'invention, notamment au moins celle la plus éloignée du substrat. Avantageusement, elles sont toutes munies de la couche de blocage selon l'invention.

De préférence, au moins une des couches antireflet de l'empilement est à base d'au moins un des oxydes suivants : SnO₂, ZnO, TiOL, In₂O₃, Bi₂O₃, ZrO₂, Ta₂O₅, SiO₂, Al₂O₃. Au moins une des couches antireflet peut aussi être à base d'au moins un nitrure du type Si₃N₄, AIN, d'un oxynitrure du type SiON ou oxycarbure du type SiOC.

Le substrat selon l'invention peut ensuite faire partie de vitrages, par exemple, pour bâtiment ou l'automobile, du type vitrage isolant multiple ou vitrage feuilleté. Sa ou ses couches fonctionnelles étant conductrices électriquement, le substrat peut aussi être chauffant, moyennant une alimentation électrique appropriée.

La couche de ZnO suivant l'invention, dopé d'oxyde d'aluminium et d'oxyde de silicium est pulvérisée par pulvérisation réactive d'une cible en zinc métallique, qui se compose d'un alliage de zinc de notamment 91,0 à 99,6% en poids de Zn, de notamment 0,3 à 8,0% en poids de Al et de, notamment 0,05 à 1,0% en poids de Si, notamment d'au moins 0,1 % en poids de Si.

Par l'addition du Si à la cible de Zn contenant Al, dans le rapport suivant l'invention, il s'ensuit une stabilisation thermique remarquable de l'empilement de couches global. Cet effet surprenant peut être expliqué par le fait que pour le rapport cité des quantités de Al et Si, deux oxydes mixtes Al-Si se forment avec des enthalpies de formation fortement négatives. Alors que, par exemple, Al₂O₃ présente une enthalpie de formation de seulement -380 kcal/mole, l'oxyde mixte 3Al₂O₃x2SiO₂ a une enthalpie de formation -1804 kcal/mole, et l'oxyde mixte Al₂O₃-SiO₂, une enthalpie de formation de -617 kcal/mole. Par la forte affinité de ces groupes atomiques avec l'oxygène, l'oxygène interstitiel dans la couche de ZnO est évidemment fixé de manière particulièrement forte, de sorte que lors du traitement thermique ultérieur, la couche en argent ne peut plus être modifiée par l'oxygène du réseau du ZnO, parce qu'il est fixé dans le réseau par la phase d'oxyde mixte Al-Si, thermodynamiquement stable.

Des résultats particulièrement bons sont obtenus lorsque, dans la forme de réalisation de l'invention, la couche de ZnO disposée sous la couche en argent est pulvérisée à partir d'une cible en alliage qui consiste en 98,7% en poids de Zn, 1,2% en poids de Al et 0,05 à 0,1 % en poids de Si.

Les couches restantes de l'empilement de couches peuvent consister en des composés métalliques et métaux connus et éprouvés pour l'objet cité. Ainsi, pour les couches antireflet diélectriques, des couches de SnO₂, Ta₂O₅, ZnO, ZrO₂, TiO₂, AIN et Si₃N₄ ont, en particulier, fait leurs preuves alors que la couche de blocage sur la couche en argent peut consister par exemple en un alliage CrNi ou TiPd. Des couches de blocage supérieures en alliage AlSi sont particulièrement avantageuses et plus particulièrement, un alliage avec environ 73 à 76% en poids de Al et 24 à 27% en poids de Si ou avec 63 à 67% en poids de Al et 33 à 37% en poids de Si. Les alliages AlSi sont déposés de préférence, sous forme métallique sous une atmosphère en argon pur. A côté de leur capacité, par leur affinité élevée pour l'oxygène, à fixer celui-ci fortement, ils représentent d'une part, une protection étonnamment efficace pour la couche en argent sous-jacente lors du processus de traitement thermique, sans que, d'autre part, ils abaissent essentiellement la transmission lumineuse de l'empilement de couches, même si la couche de blocage est d'une épaisseur significative.

Dans ce qui suit, l'invention est encore décrite au moyen d'un exemple comparatif d'un empilement de couches suivant l'état de la technique et d'un exemple de réalisation pour un empilement de couches suivant l'invention.

### Exemple comparatif

Sur un dispositif de pulvérisation par passage et à courant continu, on recouvre par le procédé de pulvérisation cathodique par champ magnétique, une plaque en verre flotté de 6 mm d'épaisseur, ayant pour dimensions 6x3,2 m², de l'empilement de couches suivant :
verre - SnO₂ 20 nm - ZnO:Al 17 nm - Ag 11 nm - CrNi 8 nm - SnO₂ 40 nm

La cible en zinc pour la préparation de la couche ZnO:Al est pulvérisée au moyen d'une atmosphère réactive Ar/O₂, réagissant avec une cible en Zn métallique, qui est alliée à 2% en poids de Al.

A partir des plaques en verre revêtues, on chauffe des échantillons d'une taille de 10x10 cm² dans un four de laboratoire à 670°C et on les soumet à un cycle temps-température correspondant au cycle de température dans un four réel de prétension. On mesure, pour ces échantillons, la transmission, l'émissivité et la résistance électrique, chaque fois avant et après le traitement thermique.

De plus, le comportement de lessivage des Ag⁺ de la couche avant le traitement thermique est déterminé, de manière photométrique au moyen du procédé appelé "Plattenmethode nach Kimmel et al.", comme décrit dans la revue "Glastechnische Berichte" 59 (1986), pages 252 et suivantes. Les résultats de ce procédé donnent des renseignements sur la structure de la couche en argent ; plus épais et régulier est l'édifice atomique de la couche en argent, plus faible est la possibilité que des ions argent diffusent dans les couches supérieures, en présence d'humidité et que la couche en soit lessivée. Par la couche en ZnO en dessous de la couche en argent, cette possibilité de diffusion est réduite, et ainsi, le comportement au lessivage, est amélioré.

De plus, des échantillons revêtus de taille 60 x 80 cm² sont chauffés dans un four classique de production à la température de prétension et ensuite, prétendus (trempés). Ces plaques échantillons sont évaluées visuellement.

Les mesures des échantillons de laboratoire donnent les résultats suivants :

Avant le traitement thermique :

| Echantillon | E (%) | T_{L} (%) | R (Ω) | Lessivage (mg/l) |
|---|---|---|---|---|
| 1 | 3 | 69,1 | 3,87 | 0,38 |
| 2 | 4 | 70,1 | 4,01 | 0,54 |
| 3 | 3 | 69,3 | 3,74 | 0,43 |

Après le traitement thermique :

| Echantillon | E (%) | T_{L} (%) | R (Ω) |
|---|---|---|---|
| 1 | 8 | 78 | 3,4 |
| 2 | 9 | 79 | 3,03 |
| 3 | 9 | 78 | 2,96 |

De manière semblable aux échantillons de laboratoire, les plaques échantillons traitées dans le four de production montrent également une augmentation marquée de l'émissivité et de la transmission lumineuse après le traitement thermique. De plus, les échantillons présentent un voile. Les résultats conduisent à la conclusion que la couche en argent est altérée par l'oxygène qui diffuse pendant le traitement thermique.

### Exemple de Réalisation

Dans une installation similaire à celle de l'exemple comparatif, on recouvre les plaques en verre flotté de 6 mm d'épaisseur, ayant pour dimensions 6 x 3,2 m², avec le même système de couches que pour l'exemple comparatif, à l'exception que directement sous la couche en argent, on pulvérise une couche en ZnO, qui contient en outre, du silicium. Dans ce but, on utilise une cible de zinc métallique avec 1,2% en poids de Al et 0,2% en poids de Si.

Des échantillons revêtus de mêmes quantités et tailles sont soumis de la même manière, à des traitement thermiques comme pour l'exemple comparatif, et les échantillons sont soumis aux même procédés d'épreuve, avant et après le traitement thermique. Les épreuves conduisent aux résultats suivants :

Avant le traitement thermique :

| Echantillon | E (%) | T_{L}(%) | R (Ω ) | Lessivage (mg/l) |
|---|---|---|---|---|
| 1 | 3 | 71,5 | 3,65 | 0,30 |
| 2 | 3 | 72,5 | 3,55 | 0,40 |
| 3 | 3 | 72,1 | 3,56 | 0,35 |

Après le traitement thermique :

| Echantillon | E (%) | T_{L} (%) | R (Ω) |
|---|---|---|---|
| 1 | 3-4 | 82,1 | 3,26 |
| 2 | 3 | 83,1 | 3,2 |
| 3 | 3 | 83,1 | 3,2 |

Comme les résultats le montrent, l'augmentation de l'émissivité par le traitement thermique est clairement plus faible que pour l'exemple comparatif, ou elle n'est caractérisée par aucune augmentation mesurable. A partir des valeurs trouvées pour le lessivage, on conclut que l'édifice structurel de la couche en argent n'est en aucun cas plus irrégulier que l'édifice de couche de l'exemple comparatif. Ni l'échantillon de laboratoire, ni les échantillons traités à chaud dans le four de production ne montrent de voile optiquement gênant. Globalement, une amélioration claire de la capacité de charge thermique de l'empilement de couches résulte des mesures suivant l'invention.

## Revendications

1. Substrat transparent, notamment verrier, muni d'un empilement de couches bas-émissif ou de contrôle solaire, comportant au moins cinq couches, à savoir des couches antireflet diélectriques inférieure et supérieure d'un ou de plusieurs composés métalliques ou semi-conducteurs, une couche fonctionnelle métallique à propriétés de réflexion dans l'infrarouge du type argent, une couche de blocage, disposée directement sur la couche en argent, notamment constituée d'un métal, un alliage métallique ou un oxyde sous-stoechiométrique d'un métal ou d'un alliage métallique, ainsi que d'une couche disposée directement en dessous de la couche en argent à base d'oxyde de zinc dopé avec l'aluminium, ***caractérisé en ce que*** la couche en ZnO dopée avec Al contient en outre, une certaine quantité de Si.

2. Substrat selon la revendication 1, ***caractérisé en ce que*** le rapport des quantités de Al à Si dans la couche en ZnO s'élève de 12:1 à 1:1.

3. Substrat selon la revendication 1 ou 2, ***caractérisé en ce que*** le rapport des quantités de Al à Si dans la couche en ZnO s'élève de 3,0:1 à 1,8:1.

4. Procédé de préparation d'un substrat suivant l'une quelconque des revendications 1 à 3, ***caractérisé en ce que*** la couche en ZnO dopée de Al et de Si est pulvérisée par pulvérisation cathodique réactive d'une cible de zinc métallique se composant d'un alliage de zinc à 0,3 à 8% en poids de Al et 0,05 à 1 % en poids de Si.

5. Procédé suivant la revendication 4, ***caractérisé en ce que*** la couche en ZnO dopée de Al et de Si est pulvérisée par pulvérisation cathodique réactive d'une cible de zinc métallique se composant d'un alliage de zinc à 1,2 % en poids de Al et 0,1 % en poids de Si.

## Patentansprüche

1. Transparentes Substrat, insbesondere aus Glas, versehen mit einem Low-E- oder Sonnenschutzschichtsystem, aus mindestens 5 Schichten, nämlich dielektrischen Entspiegelungsschichten oberhalb oder unterhalb von einer oder mehreren metallischen oder Halbleiter-Verbindungen, eine metallische Funktionsschicht mit reflektierenden Eigenschaften im Infrarot-Bereich, wie Silber, eine Blockerschicht, angeordnet direkt auf der Silberschicht, insbesondere bestehend aus einem Metall, einer Metallegierung oder einem unterstöchiometrischen Oxid eines Metalls oder einer Metallegierung, sowie einer unmittelbar unter der Silberschicht angeordneten Schicht aus mit Aluminium dotiertem Zinkoxid, **dadurch gekennzeichnet, dass** die mit Aluminium.dotierte ZnO-Schicht außerdem eine gewisse Menge an Si enthält.

2. Substrat nach Anspruch 1, **dadurch gekennzeichnet, dass** das Verhältnis der Mengen von Al zu Si in der ZnO-Schicht 12:1 bis 1:1 beträgt.

3. Substrat nach Anspruch 1 oder 2, **dadurch gekennzeichnet, dass** das Verhältnis der Mengen von Al zu Si in der ZnO-Schicht 3,0:1 bis 1,8:1 beträgt.

4. Verfahren zur Vorbereitung eines Substrats nach einem der Ansprüche 1 bis 3, **dadurch gekennzeichnet, dass** die mit Al und Si dotierte ZnO-Schicht durch reaktive Kathodenzerstäubung aus einem metallischen Zinktarget, bestehend aus einer Zinklegierung mit 0,3 bis 8 Gew.-% Al und 0,05 bis 1 Gew.-% Si aufgestäubt wird.

5. Verfahren nach Anspruch 4, **dadurch gekennzeichnet, dass** die mit Al und Si dotierte ZnO-Schicht durch reaktive Kathodenzerstäubung aus einem metallischen Zinktarget, bestehend aus einer Zinklegierung mit 1,2 Gew.-% Al und 0,1 Gew.-% Si aufgestäubt wird.

## Claims

1. Transparent substrate, especially a glass substrate, provided with a low-emissivity or solar-control multilayer comprising at least 5 layers, namely upper and lower dielectric antireflection layers, consisting of one or more metal or semiconductor compounds, a silver-type metal functional layer, having reflection properties in the infrared, a blocking layer, placed directly on the silver layer and consisting especially of a metal, a metal alloy or a substoichiometric oxide of a metal or of a metal alloy, and a layer placed directly beneath the silver layer, this being based on aluminium-doped zinc oxide, ***characterized in that*** the Al-doped ZnO layer also contains a certain quantity of Si.

2. Substrate according to Claim 1, ***characterized in that*** the ratio of the quantity of Al to the quantity of Si in the ZnO layer is from 12/1 to 1/1.

3. Substrate according to Claim 1 or 2, ***characterized in that*** the ratio of the quantity of Al to the quantity of Si in the ZnO layer is from 3.0/1 to 1.8/1.

4. Method of producing a substrate according to any one of Claims 1 to 3, ***characterized in that*** the AlSi-doped ZnO layer is sputtered by reactive sputtering from a zinc metal target composed of a zinc alloy containing 0.3 to 8% Al by weight and 0.05 to 1% Si by weight.

5. Method according to Claim 4, ***characterized in that*** the AlSi-doped ZnO layer is sputtered by reactive sputtering from a zinc metal target consisting of a zinc alloy containing 1.2% Al by weight and 0.1% Si by weight.
